# FASCICULE DE BREVET EUROPEEN

(11) **EP 0 815 064 B1**
(45) Date de publication et mention de la délivrance du brevet: **01.09.1999**
(21) Numéro de dépôt: 96907530.8
(22) Date de dépôt: 13.03.1996
(51) Int. Cl.: C04B 12/00, C04B 28/00

(54) **MATRICE GEOPOLYMERIQUE ALUMINO-SILICATE ALCALINE, POUR MATERIAUX COMPOSITES A RENFORTS FIBREUX ET PROCEDE D'OBTENTION**
GEOPOLYMERMATRIX AUF BASIS VON ALKALIALUMINOSILIKATEN FÜR FASERVERSTÄRKTE VERBUNDSTOFFE UND VERFAHREN ZUR HERSTELLUNG
ALKALINE ALUMINOSILICATE GEOPOLYMERIC MATRIX FOR COMPOSITE MATERIALS WITH FIBRE REINFORCEMENT AND METHOD FOR OBTAINING SAME

(30) Priorité: 15.03.1995 FR 9503015
(43) Date de publication de la demande: 07.01.1998
(73) Titulaire: Davidovits, Joseph, F-02100 Saint-Quentin (FR); DAVIDOVICS, Michel, F-60700 Pont-Ste-Maxence (FR)
(72) Inventeur: Davidovits, Joseph, F-02100 Saint-Quentin (FR); DAVIDOVICS, Michel, F-60700 Pont-Ste-Maxence (FR)
(86) Numéro de dépôt international: FR9600388
(87) Numéro de publication internationale: WO9628398

(56) Documents cités:
- WO-A-91/13830
- WO-A-91/13840
- WO-A-95/13995
- FR-A- 2 659 963
- FR-A- 2 680 194
- 36TH INTERNATIONAL SAMPE SYMPOSIUM,SAN DIEGO,CALIFORNIA,15-18 APRIL 1991, vol. 36, J. STINSON; R. ADSIT; F.GORDANINEJAD (EDITORS), pages 1939-1949, XP000571780 J.DAVIDOVITS ET AL: "GEOPOLYMER: ULTRA-HIGH TEMPERATURE TOOLING MATERIAL FOR THE MANUFACTURE OF ADVANCED COMPOSITES" cité dans la demande

## Description

### Techniques antérieures:

On connaît déjà dans l'art antérieur des matériaux composites constitués d'un renfort en fibres céramiques et d'une matrice géopolymèrique. Ainsi le Brevet Européen EP 0 288 502 (WO 88/02741) et son équivalent le brevet US 4 888 311 décrivent des matériaux composites à renfort fibreux et une matrice géopolymèrique contenant un géopolymère poly(sialate) M(-Si-O-Al-O-), soit le rapport (SiO₄):(AlO₄) = 1, ou poly(sialate-siloxo) M(-Si-O-Al-O-Si-O-), soit le rapport (SiO₄):(AlO₄) = 2, avec des charges de dimension inférieure à 5 microns, de préférence inférieure à 2 microns. D'autres géopolymères employés comme matrice de composites fibreux sont décrits dans le Brevet EP 0 518 980 (WO 91/13830 ) relatif à un géopolymère poly(sialate-disiloxo) M(-Si-O-Al-O-Si-O-Si-O-), soit le rapport (SiO₄):(AlO₄) = 3. Le Brevet EP 0 518 962 (WO 91/13840) décrit un composé géopolymèrique qui comporte une matrice polymérique poly(sialate-disiloxo) M(-Si-O-Al-O-Si-O-Si-O-), soit le rapport (SiO₄):(AlO₄) = 3, dans laquelle on trouve une phase siliceuse SiO₂,H₂O de type Opal CT et un alumino-fluorure alcalin M₃AlF₆. En fonction de la quantité de la phase siliceuse SiO₂,H₂O de type Opal CT et de l'alumino-fluorure alcalin, le rapport total SiO₂/Al₂O₃ varie entre 5.5 et 75, mais le rapport (SiO₄):(AlO₄) de la matrice polymèrique poly(sialate-disiloxo) M(-Si-O-Al-O-Si-O-Si-O-) reste toujours égal à 3. Dans ces deux brevets, la matière première utilisée est une fumée de silice spéciale, appelée silice thermique. Comme on peut le lire encore dans la publication PCT/WO 91/13840, page 3 lignes 1 à 17, pour des valeurs globales de Si et Al telles que le rapport Si:Al>6.5, le composé géopolymèrique obtenu est instable à haute température. Il boursoufle, ce qui montre qu'il existe une phase purement silicate, très fusible et qui n'a pas pris part à la réticulation tridimensionnelle. Pour remédier à ce grave défaut on ajoute, dans l'art antérieur, des produits connus pour permettre le durcissement des solutions de silicates alcalins, comme le fluosilicate de sodium Na₂SiF₆ . De même on peut lire dans PCT WO 91/13830, page 7, ligne 40 et page 8 lignes 1-11, qu'il se forme un alumino-silicate linéaire soluble (et fusible) lorsque l'on a K₂O/Al₂O₃>1.30. Ceci est un défaut majeur qui est éliminé par l'addition d'un agent stabilisant ou tout autre agent durcisseur employé dans les liants à base de silicate alcalin, dans ce cas précis, l'oxyde de zinc ZnO à raison de 2.5% à 3.5% en poids de la matrice.

Certaines fibres céramiques, plus particulièrement les fibres contenant du carbone, ne peuvent pas être utilisées à des températures supérieures à 424°C, dans l'air. Au dessus de cette température, le carbone s'oxyde, et les résistances mécaniques du renfort diminuent considérablement. Ce phénomène est très connu dans l'art antérieur comme on peut le lire dans l'article "Fiber Reinforced Glasses and Glass-Ceramics for High Performance Applications", par K.M Prewo et al., American Ceramic Society Ceramic Bulletin, Vol. 65, n° 2, page 305, (1986). De même pour les matrices géopolymèriques de l'art antérieur (WO 88/02741, WO 91/13830, WO 91/13840), il est connu que l'emploi de la fibre de carbone est limité à une température inférieure à 450°C, comme on peut le lire dans l'article "Geopolymer: Ultra-High Temperature Tooling Material for the Manufacture of Advanced Composites", par J.Davidovits et al., 36th International SAMPE Symposium Proceedings (1991), USA, Vol. 36, page 1943 ainsi que dans la Figure 8, page 1946.

Dans les techniques de l'art antérieur, afin d'avoir un matériau composite stable au feu jusque 1000°C, il faut soit traiter spécialement la fibre de carbone par les techniques de déposition en phase vapeur (vapeur de carbure de silicium ou de nitrure de silicium), soit employer un renfort de fibre en SiC, par exemple de type Nicalon. Or la fibre SiC ou les traitement spéciaux sont d'un coût très élevé, ce qui limite leurs applications. A titre de comparaison, et pour des propriétés mécaniques équivalentes, la fibre de carbone est 20 fois moins chère que la fibre de SiC Nicalon.

### Exposé de l'invention:

L'invention a pour objet la description d'une matrice géopolymèrique pour la fabrication de matériaux composites thermostables constitués d'un renfort en fibres. L'invention décrit une matrice géopolymèrique différente de celles employées dans l'art antérieur, car elle permet l'emploi de renfort fibreux constitué de fibre de carbone ou de graphite pouvant être utilisé jusqu'à des températures de 1000°C.

Dans un des procédés préférés de préparation d'une matrice géopolymèrique selon l'invention, on prépare et ensuite on laisse maturer un mélange réactionnel à base d'oxyde alumino-silicate de composition comprise entre (2SiO₂,AlO₂) et (34SiO₂,AlO₂) et de solution aqueuse de silicate alcalin, tel que les rapports molaires des produits réactionnels exprimés en terme d'oxyde soient compris entre:

| | |
|---|---|
| K₂O/SiO₂ | 0.08 et 0.145 |
| SiO₂/Al₂O₃ | 6.50 et 70 |
| K₂O/Al₂O₃ | 0.95 et 9.50 |

puis on fait durcir à une température comprise entre 60°C et 200°C.

Bien qu'ayant des rapports SiO₂/Al₂O₃ >6.5 et M₂O/Al₂O₃ >1.3, le durcissement de la matrice géopolymèrique de l'invention se fait sans aucun ajout de produit connu pour durcir des solutions de silicates alcalins, contrairement à l'art antérieur décrit ci-dessus et dans le Tableau 1.

Le Tableau I montre les différences entre les matrices de l'art antérieur et la matrice de la présente invention.

**Tableau I:**

| Rapport molaire des oxydes des matrices géopolymèriques | | | | |
|---|---|---|---|---|
| (M est soit K, Na ou un mélange K+Na). | | | | |
| Rapport molaire | WO 88/02741 | WO 91/13830 | WO 91/13840 | présente invention |
| M₂O/SiO₂ | 0.10-0.95 | 0.15-0.25 | 0.01-3.63 | 0.08-0.145 |
| SiO₂/Al₂O₃ | 2.50-6.00 | 5.50-6.50 | 5.50-75 | 6.5-70 |
| M₂O/Al₂O₃ | 0.20-5.70 | 1.00-1.60 | 1.00-20 | 0.95-9.50 |
| F-/Al₂O₃ | 0 | 0 | 0.50-50 | 0 |
| ZnO | 0 | 2.5%-3.5% | 0 | 0 |
| | | en poids | | |

La matrice géopolymèrique alumino-silicate alcaline a une composition exprimée en terme des oxydes, après déshydratation, qui est:

*y*M₂O:Al₂O₃:*x*SiO₂

dans laquelle "*x*" est une valeur comprise entre 6.5 et 70, "*y*" est une valeur comprise entre 0.95 et 9.50, "M" étant soit Na, K, ou le mélange Na+K.

La matrice géopolymèrique est constituée d'un nanocomposite. Un nanocomposite est un matériau comprenant au moins deux composants, dont un au moins est visible au microscope, et a une dimension de l'ordre de la dizaine ou la centaine de nanomètre. Le nanocomposite selon l'invention comprant au moins deux phases, dont
a) une première phase nodulaire d'oxyde alumino-silicate composée de nanosphères de diamètre inférieur à 1 micron, de préférence inférieur à 500 nm.
b) une seconde phase polymérique, essentiellement constituée par du poly(alumino-silicate) alcalin possèdant au moins un ou plusieurs sites de réticulation par pont sialate (-Si-O-Al-O-), le dit site de réticulation ayant une formule brute comprise entre M₄Si₂AlO₁₀ et M₂Si₄AlO₁₆, de telle sorte que dans ce poly(alumino-silicate) alcalin, le rapport Si(O4):Al(O4) soit >3.5, de préférence >5.

Les géopolymères sont en général amorphes aux Rayons X et la méthode de diffraction aux rayons X ne peut pas être utilisée pour caractériser la matrice géopolymèrique. L'art antérieur nous enseigne que la meilleure méthode consiste a utiliser la spectroscopie en Résonance Magnétique Nucléaire, en phase solide MAS-NMR de ²⁹Si et ²⁷Al. Dans la matrice géopolymèrique, le spectre en résonance magnétique nucléaire, ²⁹Si MASNMR présente trois zones de résonance: une première à - 87±5ppm correspondant à SiO₄ de type Q₂(2Si,2OH) c'est à dire un poly(silicate) hydraté linéaire; une seconde à -98±5ppm correspondant à SiO₄ de type Q₃(3Si,1OH) c'est à dire un poly(silicate) hydraté ramifié, et aussi Q4(3Si,1Al) c'est à dire un poly(alumino-silicate) tridimensionnel (cette résonance étant en relation avec la seconde phase polymérique du nanocomposite); une troisième à -107±5ppm correspondant à SiO₄ de type Q₄(4Si) c'est à dire l'acide poly(silicique) (SiO₂)ₙ (cette résonance étant en relation avec la première phase siliceuse nodulaire du nanocomposite).

La seconde phase polymérique est entièrement amorphe au microscope. Elle correspond à un poly(alumino-silicate) dans lequel les chaînes de poly(silicate) linéraire sont plus ou moins réticulées entre elles par un pont sialate (-Si-O-Al-O-). On peut également interpréter la réticulation par pont sialate comme étant le site de liaison entre les chaines de poly(silicate) et la surface des nanosphères de la phase siliceuse nodulaire. La densité en pont sialate ou en site de réticulation peut être exprimée par le rapport Si(O4):Al(O4). Lorsque celui-ci est inférieur à 3.5 on considère que la matrice géopolymèrique est similaire de celle de l'art antérieur; dans le cadre de la présente invention, ce rapport Si(O4):Al(O4) est supérieur à 3.5. Il est de préférence supérieur à 5 et peut atteindre 70. Les sites de réticulation par pont sialate ont une formule brute variant de M₄Si₂AlO₁₀, M₃Si₃AlO₁₃ et M₂Si₄AlO₁₆. Dans la matrice géopolymèrique, le spectre en résonance magnétique nucléaire, ²⁷Al MASNMR est attribué à cette seconde phase. Il possède une résonance variant entre 70±5ppm, 65±5ppm et 55±5ppm, indiquant que la coordination de l'aluminium est AlO₄, de type AlQ₄(2Si), AlQ₄(3Si) et AlQ₄(4Si).

### Meilleures manières pour réaliser l'invention:

La matrice géopolymèrique alumino-silicate alcaline, pour matériaux composites, selon la présente invention est un nanocomposite comprenant 60 à 95 parties en poids de la phase siliceuse nodulaire et 05 à 40 parties en poids de la phase polymèrique poly(alumino-silicate).

Une conséquence très surprenante de l'utilisation de la matrice géopolymèrique selon la présente invention réside dans le fait qu'elle protège les fibres contre l'oxydation et leur dégradation dans l'air, jusque 1000°C. Le plus remarquable est que, pour obtenir cette propriété, il n'est pas nécessaire de traiter spécialement la fibre de carbone ou de graphite. On suppose que, dans la présente invention, la protection de la fibre de carbone contre l'oxydation est le résultat de deux phénomènes. Tout d'abord, entre 300°C et 600°C, la matrice s'expanse à cause du départ du reste de l'eau de constitution et empêche, ainsi, la pénétration de l'oxygène ambiant. En même temps, on suppose aussi que la phase siliceuse réagit avec la surface de la fibre de carbone, formant une interface contenant du Carbure de Silicium SiC, avec vraisemblablement dégagement de gaz CO₂ qui empêche aussi l'oxydation. L'intensité de l'expansion est évidemment fonction du taux de réticulation de la phase polymèrique, c'est à dire du nombre de ponts sialates (-Si-O-Al-O-) qui relient entre elles les chaînes de poly(silicate) et la surface des nanosphères siliceuses. On évitera cependant une réticulation complète de la phase polymèrique. En effet, comme nous l'enseigne l'art antérieur, lorsque le géopolymère est entièrement réticulé tridimensionnellement, avec un rapport (SiO4):(AlO4) = 3.5 ou <3.5, la fibre de carbone n'est plus protégée contre l'oxydation.

Le nanocomposite qui constitue la matrice géopolymèrique comprend une première phase nodulaire d'oxyde alumino-silicate composée de nanosphères de diamètre inférieur à 1 micron, de préférence inférieur à 500 nm. Ces nanosphères sont composées d'oxyde alumino-silicate amorphe obtenu par condensation et refroidissement des vapeurs de SiO et AlO générées à des températures supérieures à 2000°C. En fonction de la matière première de départ et du procédé de fabrication, la poudre d'oxyde alumino-silicate contient une quantité plus ou moins grande d'oxyde d'alumine de structure amorphe totalement différente d'Al₂O₃. Afin de montrer cette structure particulière, nous écrivons la formule de cet oxyde alumino-silicate, par exemple (24SiO₂,AlO₂). Un exemple d'oxyde alumino-silicate utilisé pour réaliser la matrice géopolymèrique de l'invention est celui du mineral appelé "silice thermique" que l'on trouve déjà dans l'art antérieur. Ainsi, dans le brevet EP 0 518 980 on peut lire à la page 3, ligne 46-53 "..Dans un exemple préféré de l'invention, la fumée de silice thermique est spécialement préparée par électro-fusion de sable de zircon. Cette fumée de silice thermique employée contient au plus 10% en poids de Al₂O₃ et au moins 90% en poids de SiO₂. On peut lui attribuer une formule chimique brute comprise entre (13SiO₂,AlO₂) et (16SiO₂,AlO₂), c'est à dire celle d'un oxyde alumino-silicate dans lequel Al est en coordination (IV), auquel il convient d'ajouter de la silice amorphe SiO₂." Pour mieux tenir compte de la silice amorphe, nous l'incluons maintenant dans la formule brute qui se trouve ainsi comprise entre (24SiO₂,AlO₂) et (34SiO₂,AlO₂). Un autre exemple d'oxyde alumino-silicate est celui obtenu par le traitement à 2300-2500°C de poudre contenant de la silice et de l'alumine. En injectant dans un four à torche plasma une poudre de silicate d'alumine contenant par exemple 65% en poids de SiO₂, 23% en poids de Al₂O₃, la poudre se volatilise sous la haute température et les vapeurs de SiO et AlO se condensent sur les parois refroidies sous forme de nanosphères de structure amorphe, dont on peut écrire la formule brute comme étant comprise entre (2SiO₂,AlO₂) et (6SiO₂,AlO₂). En faisant varier les quantités relatives de silice et d'alumine, il est possible de fabriquer des nanosphères oxyde alumino-silicate amorphes de formule brute variant de (2SiO₂,AlO₂) à (34SiO₂,AlO₂). Les nanosphères fabriqués soit par électrofusion, soit par torche plasma, possèdent toutes la même particularité; si elles sont mises dans une solution alcaline, par exemple de potasse KOH, on constate que cette solution alcaline s'enrichit an atome d'aluminium, avec formation d'aluminate de potassium soluble. Mais la quantité d'AlO₂ dissoute est inférieure d'au moins 50% à la quantité présente dans les nanosphères. On peut en déduire qu'une partie d'AlO₂ se trouve encore à l'intérieur de la nanosphère, ou peut-être plus vraisemblablement à sa surface (donc réactive). Dans les mélanges réactionnels de l'invention, l'aluminate de potassium réactif se trouvera soit en surface de la nanosphère, soit déjà dans la solution, selon la concentration initiale d'AlO₂ dans la nanosphère. C'est avec cet aluminate de potassium que se créeront les ponts sialate (-Si-O-Al-O-) et les sites de réticulation de la phase polymérique.

Afin d'assurer un taux constant de réticulation, et ainsi des performances supérieures à haute température, il est quelque fois avantageux d'ajouter dans le mélange réactionnel une solution finement dispersée d'oligo-sialate alcalin, par exemple K-{(OH)₃-Si-O-Al(OH)₃}. L'oligo-sialate alcalin est obtenu en dispersant dans une solution de silicate alcalin un alumino-silicate hydraté, comme par exemple la kaolinite (2SiO₂,Al₂O₃,2H₂O), ayant l'aluminium en coordination (AlO6). L'oxyde alumino-silicate employé dans la fabrication des géopolymères de l'art antérieur, à savoir (Si₂O₅,Al₂O₂) dans lequel le cation Al est en coordination (IV-V), ne convient pas dans la présente invention. Cet oxyde (Si₂O₅,Al₂O₂) contient deux fois plus d'Al que la nanosphère (2SiO₂,AlO₂); de plus, dans le test précédent de dissolution dans la solution alcaline de KOH, la presque totalité d'Al se trouve dissoute; il est donc trop réactif et il réagit pratiquement immédiatement; il y a formation immédiate d'un réseau tridimensionnel totalement différent des sites de réticulation décrit dans cette invention, car il ne protège pas la fibre de carbone contre l'oxydation à haute température. Au contraire, les solutions d'oligo-sialate alcalin de l'invention se présentent sous forme de suspension stable dans le temps et, la matrice géopolymèrique protège la fibre de carbone contre l'oxydation.

Un procédé préféré de préparation de la matrice géopolymèrique consiste à préparer et ensuite à laisser maturer un mélange réactionnel constitué d'oxyde alumino-silicate de composition comprise entre (2SiO₂,AlO₂) et (34SiO₂,AlO₂), et de solution aqueuse de silicate alcalin, tel que les rapports molaires des produits réactionnels exprimés en terme d'oxyde soient compris entre:

| | |
|---|---|
| K²O/SiO₂ | 0.08 et 0.145 |
| SiO₂/Al₂O₃ | 6.50 et 70 |
| K₂O/Al₂O₃ | 0.95 et 9.50 |

puis à faire durcir à une température comprise entre 60°C et 200°C, sans aucun ajout de produit connu pour durcir des solutions de silicates alcalins.

Lorsque le dit oxyde alumino-silicate a une composition comprise entre (24SiO₂,AlO₂) et (34SiO₂,AlO₂), on ajoute dans 100 parties en poids de la dite solution aqueuse de silicate alcalin, de 0 à 40 parties en poids, de préférence 5 à 30 parties en poids, d'un alumino-silicate hydraté ayant le cation Al en coordination Al(O6), de telle sorte que les rapports molaires des produits réactionnels exprimés en terme d'oxyde soient compris entre:

| | |
|---|---|
| M₂O/SiO₂ | 0.097 et 0.11 |
| SiO₂/Al₂O₃ | 10 et 55 |
| M₂O/Al₂O₃ | 0.97 et 6.1 |

Puis on fait durcir à une température entre 60°C et 200°C.

La matrice géopolymèrique alumino-silicate alcaline, après déshydratation, possède une composition exprimée en terme des oxydes qui est:

*y*M₂O:Al₂O₃:*x*SiO₂

dans laquelle *"x"* est une valeur comprise entre 6.5 et 70, *"y"* est une valeur comprise entre 0.95 et 9.50, "M" étant soit Na, K, ou le mélange Na+K.

Les sites de réticulation par pont sialate ont une formule brute variant de M₄Si₂AlO₁₀, M₃Si₃AlO₁₃ et M₂Si₄AlO₁₆. Dans la matrice géopolymèrique, le spectre en résonance magnétique nucléaire, ²⁷Al MASNMR est attribué à cette seconde phase.

Selon la terminologie adoptée pour les géopolymères alcalins, le site de réticulation de formule brute M₄Si₂AlO₁₀ peut être écrit AlO₄:2SiO₃:M₄, soit *aluminate* (AlO₄) - *disiloxo* (2SiO₃) *alcalin* (M₄). Il possède une résonance à 70±5ppm indiquant que la coordination de l'aluminium est AlO₄, de type AlQ₄(2Si). Le composé de formule brute M₄Si₂AlO₁₀ possède donc la structure développée suivante (avec M étant K): 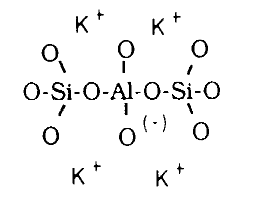 soit l'oligo(aluminate-disiloxo) de potassium, en abrégé K₄-(A2S).

Le site de réticulation de formule brute M₃Si₃AlO₁₃ peut être écrit AlO₄:3SiO₃:M₃, soit *aluminate* (AlO₄) - *trisiloxo* (3SiO₃) *alcalin* (M₃). Il possède une résonance à 65±5ppm indiquant que l'AlO₄ est de type AlQ₄(3Si). Le composé de formule brute M₃Si₃AlO₁₃ possède donc la structure développée suivante (avec M étant K): 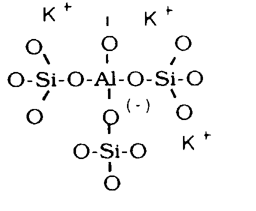 soit l'oligo(aluminate-trisiloxo) de potassium, en abrégé K₃-(A3S).

Le site de réticulation de formule brute M₂Si₄AlO₁₆ peut être écrit AlO₄:4SiO₃:M₂, soit *aluminate* (AlO₄) - *tetrasiloxo* (4SiO₃) *alcalin* (M₂). Il possède une résonance à 55±5ppm indiquant que l'AlO₄ est de type AlQ₄(4Si). Le composé de formule brute M₂Si₄AlO₁₆ possède donc la structure développée suivante (avec M étant K): 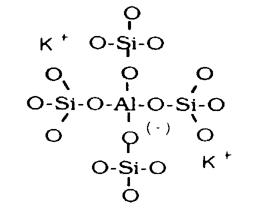 soit l'oligo(aluminate-tetrasiloxo) de potassium, en abrégé K₂-(A4S).

Les exemples qui suivent permettent d'illustrer l'invention. Ils n'ont pas de caractère limitatif sur la portée globale de l'invention telle que présentée dans les revendications. Les rapports entre les oxydes sont des rapports molaires, et les parties indiquées sont en poids.

### Exemple 1:

On prépare 245 grammes d'un mélange réactionnel contenant:
H₂O: 3.5 moles; K₂O: 0.276 moles; SiO₂:2.509 moles; Al₂O₃: 0.039 moles.
Al₂O₃ provient d'un oxyde aluminosilicate amorphe préparé par electrofusion de silico-aluminate naturel, sa formule moyenne étant comprise entre (24SiO₂,AlO₂) et (34SiO₂,AlO₂); SiO₂ provient de cet oxyde aluminosilicate et d'une solution de silicate de potassium de rapport molaire K₂O/SiO₂ voisin de 1; K₂O provient du silicate de potassium. Le rapport molaire des oxydes réactionnels est égal à:

| | |
|---|---|
| K₂O/SiO₂ | 0.11 |
| SiO₂/Al₂O₃ | 63.20 |
| K₂O/Al₂O₃ | 7.07 |

On laisse maturer le mélange pendant 1 à 2 heures et ensuite on imprègne un tissus de fibre de carbone d'orientation 0/90, dont la fibre est de type 3K PAN. Le rapport, après essorage, entre le poids de fibre et le poids de résine est 45/55, respectivement. On réalise un composite de 6 mm environ d'épaisseur comprenant 22 couches de ce tissus imprégné, puis on le place dans un sac sous vide, à température ambiante pendant 60 minutes, afin d'extraire le maximum d'eau. Le composite est ensuite placé sous une presse chauffante à 80°C, pendant 3 heures. Il peut également être mis dans une enceinte, sous vide, à 80°C, pendant 3 heures. On mesure la résistance à la flexion et la résistance à l'arrachement, à la température ambiante, puis après une heure à différentes températures. Les résultats se trouvent dans les tableaux 2 et 3:

**Tableau 2:**

| Résistance Flexion à 20°C et après 1 heure à 800°C | | |
|---|---|---|
| Température | 20°C | 800°C |
| force appliquée | 625 N | 390 N |
| Résistance à la flexion | 245 MPa | 65 MPa |

Si la résistance à la flexion après 1 heure à 800°C diminue plus que la force appliquée, cela provient du fait que l'épaisseur de la plaque augmente par expansion, passant de 5.6 mm à 8.4 mm.

La résistance à l'arrachement est assimilée à la résistance à la traction de la matrice géopolymèrique. Celle-ci diminue également en fonction de la température:

**Tableau 3:**

| Résitance traction de la matrice après traitement 1 heure aux températures. | | | | | | |
|---|---|---|---|---|---|---|
| Température Résistance traction matrice | 20°C | 200°C | 400°C | 600°C | 800°C | 1000°C |
| Exemple 1 | 14 MPa | 12.5 MPa | 6.8 MPa | 4.6 MPa | 4.6 MPa | 5.6 MPa |
| Exemple 2 | 15 MPa | 13 MPa | 8 MPa | 6MPa | 6 MPa | 7.5 MPa |

Le spectre ²⁷Al NMR a une résonance à 55±5ppm. Le site de réticulation par pont sialate (-Si-O-Al-O-) de la matrice est du type K₂-(A4S), de formule brute M₂Si₄AlO₁₆. L'expansion de près de 50% de la matrice géopolymèrique provient du fait que les chaînes polysilicates de la phase polymèrique sont très peu réticulées, la majorité de la réticulation par pont sialate ayant lieu à la surface de la nanosphère. Le nanocomposite contient 70 parties en poids de la phase siliceuse nodulaire et 30 parties en poids de la phase polymèrique poly(alumino-silicate). Le spectre ²⁹Si MASNMR, possède trois zones de résonance: - 87±5 ppm, -98±5 ppm, -107±5 ppm.

### Exemple 2:

En ajoutant 21g de kaolinite dans la solution de silicate alcalin du mélange de l'Exemple 1, on obtient 266 grammes d'un mélange réactionnel contenant:
H₂O: 3.5 moles; K₂O: 0.276 moles; SiO₂:2.671 moles; Al₂O₃: 0.1207 moles. Le rapport molaire des oxydes réactionnels est égal à:

| | |
|---|---|
| K₂O/SiO₂ | 0.103 |
| SiO₂/Al₂O₃ | 22.129 |
| K₂O/Al₂O₃ | 2.286 |

On prépare une plaque de la même manière que dans l'Exemple 1. L'épaisseur de la plaque a augmenté de 25% entre 20°C et 800°C et les résistances à haute température sont plus élevées (voir Tableau 3), avec une résistance à la flexion à 800°C de 95 MPa.

Le spectre ²⁷Al NMR a une résonance à 65±5ppm et 55±5ppm. Le site de réticulation par pont sialate (-Si-O-Al-O-) de la matrice est du type K₂-(A4S) et K₃-(A3S), de formule brute M₂Si₄AlO₁₆ et M₃Si₃AlO₁₃. L'expansion de 25% de la matrice géopolymèrique indique que les chaines polysilicates de la phase polymèrique sont réticulées, la réticulation par pont sialate ayant lieu à la surface de la nanosphère et aussi entre les chaines poly(silicate). Le nanocomposite contient 65 parties en poids de la phase siliceuse nodulaire et 35 parties en poids de la phase polymèrique poly(alumino-silicate). Le spectre ²⁹Si MASNMR est large avec trois zones de résonance: - 87±5 ppm, -98±5 ppm, -107±5 ppm.

### Exemple 3:

On prépare 2259 grammes d'un mélange réactionnel contenant:
H₂O: 28,14 moles; K₂0: 2,64 moles; SiO₂: 23,69 moles; Al₂O₃: 0,67 moles.
Al₂O₃ provient d'un oxyde aluminosilicate amorphe préparé par torche plasma à 2400°C à partir de silico-aluminate naturel, sa formule moyenne étant comprise entre (13SiO₂,AlO₂) et (16SiO₂,AlO₂); SiO₂ provient de cet oxyde aluminosilicate et d'une solution de silicate de potassium de rapport molaire K₂O/SiO₂ voisin de 1; K₂O provient du silicate de potassium. Le rapport molaire des oxydes réactionnels est égal à:

| | |
|---|---|
| K₂O/SiO₂ | 0.11 |
| SiO₂/Al₂O₃ | 35.35 |
| K₂O/Al₂O₃ | 3.94 |

On imprègne un tissus de fibre de carbone avec ce mélange réactionnel de l'Exemple 3. Le rapport, après essorage, entre le poids de fibre et le poids de résine est 60/40, respectivement. On réalise un composite comprenant 10 couches de ce tissus imprégné, puis on le place dans une enceinte, sous vide, à température ambiante pendant 60 minutes, afin d'extraire le maximum d'eau. Le composite est ensuite placé sous une presse chauffante à 80°C, pendant 3 heures. Il peut également être mis dans une enceinte, sous vide, à 80°C, pendant 3 heures.

On obtient une plaque ayant une résistance à la flexion de 200 MPa, stable thermiquement jusque 1000°C, permettant la réalisation d'excellente structure coupe-feu.

### Exemple 4:

On réalise deux composites selon l'Exemple 3, sauf qu'ils sont placés de chaque coté d'une couche de 10 mm faite en nid d'abeille Nomex. On fait durcir le tout sous la presse chauffante. On obtient un panneau léger coupe feu, doté de résistances mécaniques élevées.

### Exemple 5:

En ajoutant 42g de kaolinite et 10 g d'eau dans la solution de silicate alcalin du mélange de l'Exemple 1, on obtient 297 grammes d'un mélange réactionnel contenant:
H₂O: 4.22 moles; K₂O: 0.276 moles; SiO₂:2.833 moles; Al₂O₃: 0.2827 moles.

Le rapport molaire des oxydes réactionnels est égal à:

| | |
|---|---|
| K₂O/SiO₂ | 0.097 |
| SiO₂/Al₂O₃ | 10.02 |
| K₂O/Al₂O₃ | 0.976 |

On prépare une plaque de la même manière que dans l'Exemple 1. L'épaisseur de la plaque a augmenté de 5% entre 20°C et 800°C.

Le spectre ²⁷Al NMR a une résonance montrant des pics à 70±5ppm, 65±5ppm et 55±5ppm. Les sites de réticulation par pont sialate (-Si-O-Al-O-) de la matrice sont du type K₂-(A4S), K₃-(A3S) et K₄-(A2S). La faible expansion de la matrice géopolymèrique indique que les chaines polysilicates de la phase polymèrique sont bien réticulées, la réticulation par pont sialate ayant lieu à la surface de la nanosphère et entre les chaines poly(silicate). Le nanocomposite contient 60 parties en poids de la phase siliceuse nodulaire et 40 parties en poids de la phase polymèrique poly(alumino-silicate).

Ces composites servent à fabriquer une structure qui permet de construire des filtres à air de très haute efficacité, de classe EU8 et EU9, résistant à l'incendie. Selon la nature de la fibre de renforcement, ces filtres à air pourront être utilisés en continu, par exemple, avec la fibre d'alumine à une température <1000°C, avec la fibre de carbure de silicium à une température >1000°C. On adapte le lut d'étanchéité, en fonction de la nature de la matière filtrante proprement dite et de la température d'utilisation. Ce lut d'étanchéité est réalisé à l'aide de résine géopolymèrique de type poly(sialate-disiloxo) (K)-PSDS, ou Fluoro-poly(sialate-disiloxo) (F,K,Na)-PSDS.

Tout homme de l'art comprendra aisément l'intérêt du procédé de fabrication des matériaux composites céramique-géopolymèrique selon l'invention, plus particulièrement lorsqu'il comparera les propriétés thermiques des matériaux contenant de la fibre de carbone ou de graphite. En effet dans les techniques de l'art antérieur, afin d'avoir un matériau composite stable au feu jusque 1000°C, il fallait soit traiter spécialement la fibre de carbone par les techniques de déposition en phase vapeur (vapeur de carbure de silicium ou de nitrure de silicium), soit employer un renfort de fibre en SiC, par exemple de type Nicalon. Or la fibre SiC ou les traitement spéciaux sont d'un coût très élevé, ce qui limite leurs applications. A titre de comparaison, et pour des propriétés mécaniques équivalentes, la fibre de carbone est 20 fois moins chère que la fibre de SiC Nicalon. L'intérêt économique du procédé selon l'invention est donc évident. Bien entendu, cette matrice géopolymèrique peut être également utilisée avec tous les autres renforts fibreux ainsi qu'avec de nombreux autres renforts qui permettent de fabriquer des matériaux composites. On citera par exemple les particules de mica et autres particules similaires destinés à fabriquer des matériaux stables aux hautes températures.

L'homme de l'art pourra également ajouter dans les mélanges réactionnels tout agent auxiliaire minéral ou organique connu pour augmenter la qualité de l'imprégnation et/ou diminuer la quantité d'air inclus dans la matrice. Diverses modifications peuvent donc être apportées par l'homme de l'art à la matrice géopolymèrique et au procédé qui viennent d'être décrits uniquement à titre d'exemple, sans sortir du cadre de l'invention.

## Revendications

1. Matrice géopolymèrique alumino-silicate alcaline, pour matériaux composites à renforts fibreux, dont la composition exprimée en terme des oxydes, après déshydratation, est:
*y*M₂O:Al₂O₃:*x*SiO₂
dans laquelle *"x"* est une valeur comprise entre 6.5 et 70, *"y"* est une valeur comprise entre 0.95 et 9.50, "M" étant soit Na, K, ou le mélange Na+K, *caractérisée* en ce que cette matrice géopolymerique possède un spectre ²⁹Si MASNMR, ayant trois zones de résonance : -87 5 ppm, -98 5 ppm, -170 5 ppm et est constituée d'un nanocomposite comprenant au moins deux phases, une première phase nodulaire d'oxyde alumino-silicate amorphe composée de nanosphères de diamètre inférieur à1 micron, de préférence inférieur à 500 nm, et une seconde phase polymèrique, essentiellement constituée par du poly(alumino-silicate) alcalin possèdant au moins un ou plusieurs sites de réticulation par pont sialate (-Si-O-Al-O-), le dit site de réticulation ayant une formule brute comprise entre M₄Si₂AlO₁₀ et M₂Si₄AlO₁₆, de telle sorte que dans ce poly(alumino-silicate) alcalin, le rapport Si(O4):Al(O4) soit >3.5, de préférence >5.

2. Matrice géopolymèrique selon la revendication 1) *caractérisée* en ce que dans la dite seconde phase polymèrique, un site de réticulation par pont sialate (-Si-O-Al-O-) a une formule brute égale à M₄Si₂AlO₁₀ et peut être mis en évidence par le spectre en résonance magnétique nucléaire, ²⁷Al MASNMR, à 70±5ppm, indiquant que la coordination de l'aluminium est AlO₄, de type AlQ₄(2Si), soit la formule développée (avec M étant K): 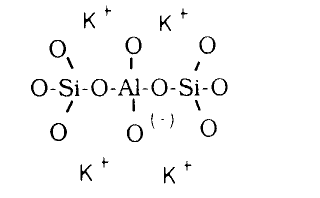 dans la terminologie géopolymèrique, le dit site de réticulation est donc l'oligo (aluminate-disiloxo) de potassium K₄-(A2S) ou K₄:AlO₄:2SiO₃.

3. Matrice géopolymèrique selon la revendication 1) *caractérisée* en ce que dans la dite seconde phase polymèrique, un site de réticulation par pont sialate (-Si-O-Al-O-) a une formule brute égale à M₃Si₃AlO₁₃ et peut être mis en évidence par le spectre en résonance magnétique nucléaire, ²⁷Al MASNMR, à 65±5ppm, indiquant que la coordination de l'aluminium est AlO₄, de type AlQ₄(3Si), soit la formule développée (avec M étant K): 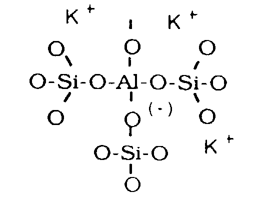 dans la terminologie géopolymèrique, le dit site de réticulation est donc l'oligo (aluminate-trisiloxo) de potassium K₃-(A3S) ou K₃:AlO₄:3SiO₃.

4. Matrice géopolymèrique selon la revendication 1) *caractérisée* en ce que dans la dite seconde phase polymèrique, un site de réticulation par pont sialate (-Si-O-Al-O-) a une formule brute égale à M₂Si₄AlO₁₆ et peut être mis en évidence par le spectre en résonance magnétique nucléaire, ²⁷Al MASNMR, à 55±5ppm, indiquant que la coordination de l'aluminium est AlO₄, de type AlQ₄(4Si), soit la formule développée (avec M étant K): 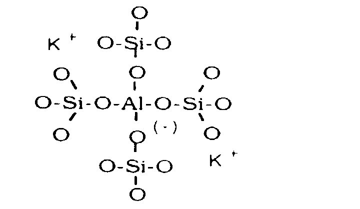 dans la terminologie géopolymèrique, le dit site de réticulation est donc l'oligo (aluminate-tetrasiloxo) de potassium K₂-(A4S) ou K₂:AlO₄:4SiO₃.

5. Matrice géopolymèrique alumino-silicate alcaline, pour matériaux composites, selon la revendication 1, *caractérisée* en ce que le dit nanocomposite comprend 60 à 95 parties en poids de la dite phase siliceuse nodulaire pour 05 à 40 parties en poids de la dite phase polymèrique.

6. Matériau composite contenant des renforts fibreux et une matrice géopolymèrique selon l'une quelconque des revendications 1 à 5.

7. Matériau composite selon la revendication 6, caractérisé en que lorsque le dit renfort fibreux contient des fibres de carbone ou de graphite, le dit matériau composite résiste à l'oxydation jusqu'à environ 1000°C.

8. Procédé de préparation d'une matrice géopolymèrique selon l'une quelconque des revendications 1 à 5, *caractérisé* en ce qu'il consiste à préparer et ensuite à laisser maturer un mélange réactionnel constitué d'oxyde alumino-silicate de composition comprise entre (2SiO₂,AlO₂) et (34SiO₂,AlO₂), et de solution aqueuse de silicate alcalin, tel que les rapports molaires des produits réactionnels exprimés en terme d'oxyde soient compris entre:
| | | | |
|---|---|---|---|
| K₂O/SiO₂ | 0.08 | et | 0.145 |
| SiO₂/Al₂O₃ | 6.50 | et | 70 |
| K₂O/Al₂O₃ | 0.95 | et | 9.50 |
puis à faire durcir à une température comprise entre 60°C et 200°C, sans aucun ajout de produit connu pour durcir des solutions de silicates alcalins.

9. Procédé selon la revendication 8) *caractérisé* en ce que lorsque le dit oxyde alumino-silicate a une composition comprise entre (24SiO₂,AlO₂) et (34SiO₂,AlO₂), on ajoute dans 100 parties en poids de la dite solution aqueuse de silicate alcalin, de 0 à 40 parties en poids, de préférence 5 à 30 parties en poids, d'un alumino-silicate hydraté ayant le cation Al en coordination Al(O6).

10. Procédé de fabrication d'un matériau composite thermostable aux hautes températures, constitué de libres de renfort et d'une matrice géopolymèrique selon la revendication 1, *caractérisé* en ce qu'il consiste à imprégner les fibres de renfort avec un mélange réactionnel obtenu en mélangeant:
a) une poudre contenant principalement un oxyde alumino-silicate de formule comprise entre (2SiO₂,AlO₂) et (34SiO₂,AlO₂);
b) une solution aqueuse de silicate alcalin,
de tel sorte que les rapports molaires des produits réactionnels exprimés en terme d'oxvde soient compris entre:
| | |
|---|---|
| K₂O/SiO₂ | 0.08 et 0.145 |
| SiO₂/Al₂O₃ | 6.5 et 70 |
| K₂O/Al₂O₃ | 0.95 et 9.50 |
puis à soumettre le tout à une polycondensation hydrothermale à une température comprise entre 60°C et 200°C, sans aucun ajout de produit connu pour durcir des solutions de silicates alcalins. Après polycondensation, le spectre en résonance magnétique nucléaire MASNMR pour ²⁷Al de la dite matrice géopolymèrique montre que la coordination d'une partie de l'aluminium est AlO₄, de type AlQ₄(2Si) et/ou AlQ₄(3Si) et/ou AlQ₄(4Si).

11. Procédé de fabrication d'un matériau composite thermostable aux hautes températures, constitué de fibres de renfort et d'une matrice géopolymèrique selon la revendication 1, *caractérisé* en ce qu'il consiste à imprégner les fibres de renfort avec un mélange réactionnel obtenu en mélangeant:
a) une poudre contenant principalement un oxyde alumino-silicate de formule comprise entre (24SiO₂,AlO₂) et (34SiO₂,AlO₂);
b) un liquide obtenu en ajoutant pour 100 parties en poids de solution aqueuse de silicate alcalin, 0 à 40 parties en poids, de préférence 5 à 30 parties en poids, d'un alumino-silicate hydraté ayant le cation Al en coordination Al(O6);
de tel sorte que les rapports molaires des produits réactionnels exprimés en terme d'oxyde soient compris entre:
| | |
|---|---|
| K₂O/SiO₂ | 0.097 et 0.11 |
| SiO₂/Al₂O₃ | 10 et 55 |
| K₂O/Al₂O₃ | 0.97 et 6.10 |
puis à soumettre le tout à une polycondensation hydrothermale à une température comprise entre 60°C et 200°C, sans aucun ajout de produit connu pour durcir des solutions de silicates alcalins. Le spectre ²⁹Si MASNMR est large et comprend trois zones principales de résonance à - 87±5 ppm, -98±5 ppm, -107±5 ppm.

## Patentansprüche

1. Alkali-Aluminiumsilikat-Geopolymer Matrix, für Verbundstoffe und fasernverstärkte Materialien, deren Zusammensetzung in dehydratisiertem Zustand in Oxiden ausgedrückt folgende ist
*y*M₂O:Al₂O₃:*x*SiO₂
in welchem "*x*" einen Wert zwischen 6.5 und 70, "*y*" einen Wert zwischen 0.95 und 9.50, "M", Na oder K, oder eine Mischung von Na+K darstellt, dadurch gekennzeichnet, daß diese geopolymerische Matrix in der ²⁹Si MASNMR Spektrographie, drei Bereiche bei - 87±5 ppm, -98±5 ppm, -107±5 ppm zeigt und aus einem zweiphasigen Nanokomposit besteht, dessen erste Phasen ein nodulares amorphes Aluminosilikatoxid mit Nanokugeln deren Durchmesser kleiner als 1 Mikrometer, vorwiegend kleiner als 500 nanometer enthält, und eine zweite polymerische Phase, welche aus einem alkalischen Poly(alumino-silikat) besteht, das wenigstens ein oder mehrere Vernetzungsstellen für jede Sialatbrücke (-Si-O-Al-O-) enthält, die genannte Vernetzungsstelle eine Zusammensetzung zwischen M₄Si₂AlO₁₀ und M₂Si₄AlO₁₆ hat, so daß in diesem besagten alkalischen Poly(aluminosilikat) das Verhältnis Si(O4):Al(O4) größer als 3.5, vorwiegend größer als 5 ist.

2. Geopolymerische Matrix nach Anspruch 1) dadurch gekennzeichnet, daß die besagte zweite polymerische Phase eine Sialatbrücke (-Si-O-Al-O-) enthält, welche die Zusammensetzung M₄Si₂AlO₁₀ hat, die durch ²⁷Al MASNMR-Spektroskopie bei 70±5ppm charakterisiert wird, und zeigt, daß die Koordinierung des Aluminiumatoms in AlO₄, vom Typus AlQ₄(2Si) ist, was folgender Formel entspricht (mit M gleich K): 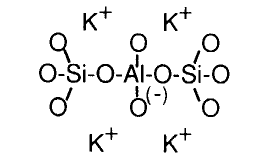 In der geopolymerischen Terminologie wird diese Vernetzungsstelle als Kalium-oligo-aluminat-disiloxo K₄-(A2S) oder K₄:AlO₄:2SiO₃ bezeichnet.

3. Geopolymerische Matrix nach Anspruch 1) dadurch gekennzeichnet, daß die besagte zweite polymerische Phase eine Sialatbrücke (-Si-O-Al-O-) enthält, welche die Zusammensetzung M₃Si₃AlO₁₃ hat, die durch ²⁷Al MASNMR-Spektroskopie bei 65±5ppm, charakterisiert wird, und zeigt, daß die Koordinierung des Aluminiumatoms in AlO₄, vom Typus AlQ₄(3Si), was folgender Formel entspricht (mit M gleich K): 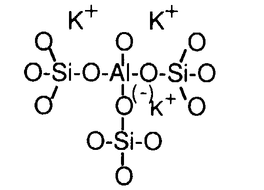 In der geopolymerischen Terminologie wird diese Vernetzungsstelle als Kalium-oligo-aluminat-trisiloxo K₃-(A3S) oder K₃:AlO₄:3SiO₃ bezeichnet.

4. Geopolymerische Matrix nach Anspruch 1) dadurch gekennzeichnet, daß die besagte zweite polymerische Phase eine Sialatbrücke (-Si-O-Al-O-) enthält, welche die Zusammensetzung M₂Si₄AlO₁₆ hat, die durch ²⁷Al MASNMR-Spektroskopie bei 55±5ppm, charakterisiert wird, und zeigt, daß die Koordinierung des Aluminiumatoms in AlO₄, vom Typus AlQ₄(4Si), was folgender Formel entspricht (mit M gleich K): 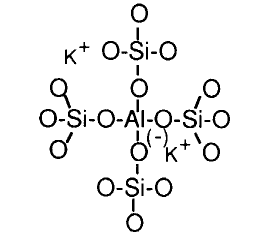 In der geopolymerischen Terminologie wird diese Vernetzungsstelle als Kalium-oligo-aluminat-tetrasiloxo K₂-(A4S) oder K₂:AlO₄:4SiO₃ bezeichnet.

5. Alkali-Aluminiumsilikat-Geopolymer Matrix, für Verbundstoffe und faserverstärkte Materialien, nach Anspruch 1) dadurch gekennzeichnet, daß das besagte Nanokomposit zwischen 60 und 95 Gewichtsanteilen besagter Silikatphase und zwischen 05 und 40 Gewichtsanteilen besagter polymerischer Phase enthält.

6. Faserverstärkter Verbundstoff mit geopolymerischer Matrix nach irgend einer der Ansprüche 1 zu 5.

7. Verbundstoff nach Anspruch 6, dadurch gekennzeichnet, daß besagte Faserverstärkung aus Kohlenstoff bzw. Graphit besteht, und besagtes Verbundstoff gegen Oxidation bis zu 1000°C geschützt wird.

8. Verfahren zur Gewinnung einer geopolymerischen Matrix nach irgend einer der Ansprüche 1 bis 5, dadurch gekennzeichnet, daß man eine Reaktionsmischung enthaltend einerseits ein Aluminosilikatoxid, dessen Zusammensetzung zwischen (2SiO₂,AlO₂) und (34SiO₂,AlO₂)liegt und eine wäßrige alkalische Silikatlösung andererseits, zubereitet und reifen läßt, so daß das Molekularverhältnis der Oxide zwischen
| | |
|---|---|
| K₂O/SiO₂ | 0.08 et 0.145 |
| SiO₂/Al₂O₃ | 6.50 et 70 |
| K₂O/Al₂O₃ | 0.95 et 9.50 |
liegt oder gleich ist.; dann lässt man das Gemisch zwischen 60°C und 200°C erhärten, ohne zusätzliche Chemikalien, welche für das Erhärten von alkalischen Silikaten bekannt sind.

9. Verfahren nach Anspruch 8 dadurch gekennzeichnet, daß wenn die Zusammensetzung des besagten Aluminosilkatoxids zwischen (24SiO₂,AlO₂) und (34SiO₂,AlO₂) liegt, alsdann fügt man 100 Gewichtsanteile zu der besagten wäßrigen alkalischen Silikatlösung 0 bis 40 Gewichtsanteile hinzu, vorwiegend 5 bis 30 Gewichtsanteile, eines hydratisierten Aluminosilikat, bei welchem das Al-Atom die Koordinierung Al(O6) besitzt.

10. Verfahren zur Herstellung eines bei hohen Temperaturen stabilen Verbundstoffes, welcher eine Faserverstärkung und eine geopolymerische Matrix nach Anspruch 1 enthält, dadurch gekennzeichnet, daß man ein faserverstärktes Material mit einer Reaktionsmischung imprägniert, bestehend aus:
a) einem Pulver aus besagtem Aluminosilikatoxid, dessen Zusammensetzung zwischen (2SiO₂,AlO₂) und (34SiO₂,AlO₂) liegt;
b) einer wäßrigen Lösung von alkalischen Silikat,
so daß in der Reaktionsmischung das Molekularverhältnis der Oxide zwischen:
| | |
|---|---|
| K₂O/SiO₂ | 0.08 et 0.145 |
| SiO₂/Al₂O₃ | 6.5 et 70 |
| K₂O/Al₂O₃ | 0.95 et 9.50 |
liegt oder gleich ist;
dann läßt man zwischen 60°C und 200°C polykondensieren, ohne zusätzliche Chemikalien, welche für das Erhärten von alkalischen Silikaten bekannt sind.
Nach der Polykondensation beweist die ²⁷Al MASNMR-Spektroskopie daß ein Teil des Aluminiums als AlO₄, vom Typus AlQ₄(2Si) und/oder AlQ₄(3Si) und/oder AlQ₄(4Si) vorkommt.

11. Verfahren zur Herstellung eines bei hohen Temperaturen stabilen Verbundstoffes, welcher eine Faserverstärkung und eine geopolymerische Matrix nach Anspruch 1 enthält, dadurch gekennzeichnet, daß man ein faserverstärktes Material mit einer Reaktionsmischung imprägniert, bestehend aus:
a) einem Pulver aus besagtem Aluminosilikatoxid, dessen Zusammensetzung zwischen (24SiO₂,AlO₂) und (34SiO₂,AlO₂) liegt;
b) einer Lösung bestehend aus 100 Gewichtsanteilen wäßrigen alkalischen Silikatlösung und 0 bis 40 Gewichtsanteilen, vorwiegend 5 bis 30 Gewichtsanteile, von einem hydratisierten Aluminosilikat, bei welchen das Al-Atom die Koordinierung Al(O6) besitzt,
so daß in der Reaktionsmischung das Molekularverhältnis der Oxide zwischen:
| | |
|---|---|
| K₂O/SiO₂ | 0.097et 0.11 |
| SiO₂/Al₂O₃ | 10 et 55 |
| K₂O/Al₂O₃ | 0.97 et 6.10 |
liegt oder gleich ist;
dann läßt man zwischen 60°C und 200°C polykondensieren, ohne zusätzliche Chemikalien welche für das Erhärten von Alkalischen Silikaten bekannt sind. Die ²⁹Si MASNMR-Spektroskopie zeigt drei Hauptbereiche bei - 87±5 ppm, -98±5 ppm, -107±5 ppm.

## Claims

1. An alkaline alumino-silicate geopolymeric matrix for composite materials with fibrous reinforcement, whose composition after dehydration expressed in terms of oxides is:
*y*M₂O:Al₂O₃:*x*SiO₂
where "x" is a value lying between 6.5 and 70, "y" is a value lying between 0.95 and 9.50, "M" being either Na, K or a mixture Na + K, wherein said geopolymeric matrix has a ²⁹Si MASNMR spectrum exhibiting three resonances: -87±5 ppm, -98±5 ppm and -107±5 ppm and is composed of a nanocomposite with at least two phases, a first nodular amorphous aluminosilicatoxid phase composed of nanospheres of diameter lower than 1 micron, and preferably lower than 500 nm, and a second polymeric phase, composed essentially of alkaline poly(alumino-silicate) having at least one or several sialate bridge (-Si-O-Al-O-) cross-linking sites, the said cross-linking site having an empirical formula lying between M₄Si₂AlO₁₀ and M₂Si₄AlO₁₆, such that in this alkaline alumino-silicate, the ratio (SiO₄):(AlO₄) is >3.5, and preferably >5.

2. A geopolymeric matrix according to claim 1) wherein in said second polymeric phase, a sialate bridge (-Si-O-Al-O-) cross-linking site has an empirical formula equal to M₄Si₂AlO₁₀ and can be identified by the nuclear magnetic resonance spectrum , ²⁷Al MASNMR, at 70±5 ppm indicating that the coordination of the aluminum is AlO₄, of the type AlQ₄(2Si), with the molecular formula (with M being K): 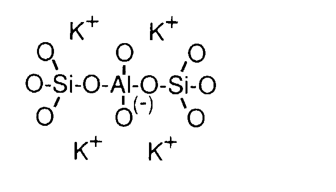 In geopolymeric terminology, the said cross-linking site is thus potassium oligo (aluminate-disiloxo) K₄-(A2S) or K₄;AlO₄:2SiO₃.

3. Geopolymeric matrix according to claim 1) wherein in said second polymeric phase, a sialate bridge (-Si-O-Al-O-) cross-linking site has an empirical formula equal to M₃Si₃AlO₁₃ and can be identified by the nuclear magnetic resonance spectrum ²⁷Al MASNMR, at 65±5 ppm, indicating that the coordination of the aluminum is AlO₄, of the type AlQ₄(3Si), with the molecular formula (with M being K): 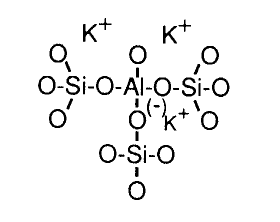 In geopolymeric terminology, the said cross-linking site is thus potassium oligo (aluminate-trisiloxo) K₃-(A3S) or K₃:AlO₄:3SiO₃.

4. Geopolymeric matrix according to claim 1) wherein in said second polymeric phase, a sialate bridge (-Si-O-Al-O-) cross-linking site has an empirical formula equal to M₂Si₄AlO₁₆ and can be identified by the nuclear magnetic resonance spectrum ²⁷Al MASNMR, at 55±5 ppm, indicating that the coordination of the aluminum is AlO₄, of the type AlQ₄(4Si), with the molecular formula (with M being K): 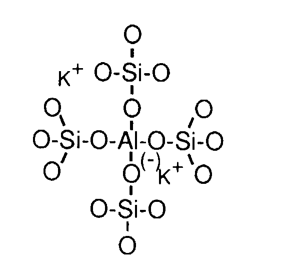 In geopolymeric terminology, the said cross-linking site is thus potassium oligo (aluminate-tetrasiloxo) K₂-(A4S) ou K₂:AlO₄:4SiO₃.

5. Alkaline alumino-silicate geopolymeric matrix for composite materials, according to claim 1, wherein said nanocomposite contains 60 to 95 parts by weight of the said nodular siliceous phase for 05 to 40 parts by weight of the said polymeric phase.

6. Composite material containing fibrous reinforcement and a geopolymeric matrix according to anyone of the claims 1 to 5.

7. Composite material according to claim 6, wherein said fibrous reinforcement contains carbon fibers or graphite, the said composite material resisting oxidation up to 1000°C.

8. Process for the preparation of a geopolymeric matrix according to anyone of the claims 1 to 5, wherein it consists of preparing and then allowing to stand a reaction mixture composed of alumino-silicate oxide of composition between (2SiO₂,AlO₂) and (34SiO₂,AlO₂), and of an aqueous alkaline silicate solution, such that the mole ratios of reaction products expressed in terms of oxide are between:
| | |
|---|---|
| K₂O/SiO₂ | 0.08 and 0.145 |
| SiO₂/Al₂O₃ | 6.50 and 70 |
| K₂O/Al₂O₃ | 0.95 and 9.50 |
and then hardening at a temperature between 60°C and 200°C, without the addition of any product used to harden alkaline silicate solutions.

9. Process according to claim 8 wherein when said alumino-silicate oxide has a composition between (24SiO₂,AlO₂) and (34SiO₂,AlO₂), there are added to hundred parts by weight of said aqueous alkaline silicate solution, 0 to 40 parts by weight, and preferably 5 to 30 parts by weight, of a hydrated alumino-silicate with the Al cation in coordination (AlO₆).

10. Fabrication process for a composite material thermostable at high temperatures, composed of reinforcing fibers and a geopolymeric matrix according to claim 1, wherein it consists of impregnating the reinforcing fibers with a reaction mixture obtained by mixing:
a) a powder containing principally an alumino-silicate oxide with a formula between (2SiO₂,AlO₂) et (34SiO₂,AlO₂);
b) an aqueous alkaline silicate solution,
such that the mole ratios of reaction products expressed in terms of oxide lie between:
| | |
|---|---|
| K₂O/SiO₂ | 0.08 and 0.145 |
| SiO₂/Al₂O₃ | 6.50 and 70 |
| K₂O/Al₂O₃ | 0.95 and 9.50 |
and then subjecting this to a hydrothermal polycondensation at a temperature between 60°C and 200°C, without the addition of any product used to harden alkaline silicate solutions. After polycondensation, the nuclear magnetic resonance spectrum MASNMR for ²⁷Al of the said geopolymeric matrix shows that the coordination of the aluminum is AlO_{4,} of the type AlQ₄(2Si) and/or AlQ₄(3Si) and/or AlQ₄(4Si).

11. Fabrication process for a composite material thermostable at high temperatures, composed of reinforcing fibers and a geopolymeric matrix according to claim 1, wherein it consists of impregnating the reinforcing fibers with a reaction mixture obtained by mixing:
a) a powder containing principally an alumino-silicate oxide with a formula between (24SiO₂,AlO₂) et (34SiO₂,AlO₂);
b) a liquid obtained by adding for hundred parts by weight of the said aqueous alkaline silicate solution, from 0 to 40 parts by weight, and preferably 5 to 30 parts by weight, of a hydrated alumino-silicate with the Al cation in coordination (AlO₆) such that the mole ratios of reaction products expressed in terms of oxide lie between:
| | |
|---|---|
| K₂O/SiO₂ | 0.097 and 0.11 |
| SiO₂/Al₂O₃ | 10 and 55 |
| K₂O/Al₂O₃ | 0.97 and 6.10 |
and then subjecting this to a hydrothermal polycondensation at a temperature between 60°C and 200°C, without the addition of any product used to harden alkaline silicate solutions. The nuclear magnetic resonance spectrum ²⁹Si MASNMR is wide and exhibits three principal resonances at -87±5 ppm, -98+5 ppm and -107±5 ppm.
